(19) Europäisches Patentamt
European Patent Office
Office européen des brevets

(11) **EP 1 672 341 B1**

(12) **EUROPÄISCHE PATENTSCHRIFT**

(45) Veröffentlichungstag und Bekanntmachung des Hinweises auf die Patenterteilung:
**25.04.2007 Patentblatt 2007/17**

(51) Int Cl.:
*G01J 5/04* (2006.01)     *G01J 5/00* (2006.01)
*H05B 3/74* (2006.01)     *H05B 6/06* (2006.01)

(21) Anmeldenummer: **05026201.3**

(22) Anmeldetag: **01.12.2005**

(54) **Verfahren zur Bestimmung des Emissionskoeffizienten einer zu beheizenden Fläche**

Method for the determination of the emissivity coefficient of a surface to be heated

Méthode pour déterminer le coefficient d'émissivité d'une surface destinée à être chauffée

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **18.12.2004 DE 102004061101**

(43) Veröffentlichungstag der Anmeldung:
**21.06.2006 Patentblatt 2006/25**

(73) Patentinhaber: **Miele & Cie. KG**
**33332 Gütersloh (DE)**

(72) Erfinder: **Ernst, Holger, Dr.**
**33613 Bielefeld (DE)**

(56) Entgegenhaltungen:
WO-A-95/16334     DE-A1- 19 856 140
US-B1- 6 375 350

EP 1 672 341 B1

**Beschreibung**

Die Erfindung betrifft ein Verfahren zur Bestimmung des Emissionskoeffizienten $\varepsilon_2$ einer zu beheizenden Fläche $A_2$.

Aus der DE-OS 22 62 737 ist ein Verfahren zum Messen der Oberflächentemperatur eines Metallgegenstands mittels eines Strahlungsthermometers bekannt, bei dem der Emissionskoeffizient $\varepsilon_2$ einer zu beheizenden Fläche $A_2$ des Metallgegenstands automatisch ermittelt und als Korrekturfaktor zum Erzielen einer besseren Temperaturmessung verwendet wird. Hierfür wird bei der Bestimmung des Emissionskoeffizienten $\varepsilon_2$ der als Metalloberfläche ausgebildeten Fläche $A_2$ die von der Metalloberfläche $A_2$ reflektierte Strahlungswärme zu der von der als Wärmeplatte ausgebildeten Strahlungsheizquelle abgegebenen Strahlungsenergie in Beziehung gesetzt.

Ein weiteres Verfahren ist aus der US6375350 bekannt.

Der Erfindung stellt sich somit das Problem ein weiteres Verfahren zur Bestimmung des Emissionskoeffizienten $\varepsilon_2$ einer zu beheizenden Fläche $A_2$ anzugeben.

Erfindungsgemäß wird dieses Problem durch ein Verfahren zur Bestimmung des Emissionskoeffizienten $\varepsilon_2$ einer zu beheizenden Fläche $A_2$ mit den Merkmalen des Patentanspruchs 1 gelöst. Vorteilhafte Ausgestaltungen und Weiterbildungen der Erfindung ergeben sich aus den nachfolgenden Unteransprüchen.

Die mit der Erfindung erreichbaren Vorteile bestehen neben dem Vorhandensein eines weiteren Verfahrens zur Bestimmung des Emissionskoeffizienten $\varepsilon_2$ einer zu beheizenden Fläche $A_2$ insbesondere in dem einfachen und robusten System zur Durchführung des erfindungsgemäßen Verfahrens. Hierdurch ist eine erhebliche Kostenreduzierung im Vergleich zu den Systemen zur Durchführung des bekannten Verfahrens möglich.

Eine vorteilhafte Weiterbildung der erfindungsgemäßen Lehre sieht vor, dass mittels der Vorrichtung zur Ermittlung der Heiztemperatur $T_1$ eine Widerstandsmessung an der Strahlungsheizquelle erfolgt. Hierdurch ist die Erfassung der Heiztemperatur $T_1$ auf einfache Weise realisiert.

Grundsätzlich ist die Vorrichtung zur Ermittlung des Wärmestroms $Q_{1/2}$ nach Art und Anordnung in weiten geeigneten Grenzen wählbar. Beispielsweise weist die Vorrichtung zur Ermittlung des Wärmestroms $Q_{1/2}$ einen Sensor, nämlich einen Strahlungsdetektor, auf.

Eine hierzu alternative Ausführungsform sieht vor, dass mittels der Vorrichtung zur Ermittlung des Wärmestroms $Q_{1/2}$ die für die Strahlungsheizquelle über ein Bedienelement manuell oder eine Gerätesteuerung automatisch gewählte Leistungsstufe erfasst wird. Auf diese Weise ist die Vorrichtung zur Ermittlung des Wärmestroms $Q_{1/2}$ auf besonders einfache und damit kostengünstige Weise realisierbar.

Grundsätzlich ist das erfindungsgemäße Verfahren und der damit ermittelte Emissionskoeffizient $\varepsilon_2$ für eine Vielzahl von Anwendungen verwendbar. Eine besonders vorteilhafte Verwendung des erfindungsgemäßen Verfahrens liegt auf dem Gebiet der pyrometrischen Temperaturmessung, nämlich wenn der Emissionskoeffizient $\varepsilon_2$ zur Ermittlung der Temperatur $T_2$ der zu beheizenden Fläche $A_2$ verwendet wird, da diese Art der Temperaturmessung von dem Emissionskoeffizienten $\varepsilon_2$ der Fläche $A_2$ abhängt und deshalb für Steuerungs- oder Regelungsanwendungen verwertbare Temperaturmessungen nur bei hinreichend genau bekanntem Emissionskoeffizienten $\varepsilon_2$ ermöglicht sind. Dies gilt insbesondere, wenn die pyrometrische Temperaturmessung als Teil der Gerätesteuerung eines Haushaltsgeräts, wie beispielsweise eines Herds oder eines autarken Kochfelds, verwendet wird.

Eine besonders vorteilhafte Weiterbildung sieht vor, dass das Verfahren während der gesamten Beheizungsdauer der Fläche $A_2$ fortlaufend durchgeführt wird. Auf diese Weise ist die Genauigkeit des Ergebnisses bei der Ermittlung des Emissionskoeffizienten $\varepsilon_2$ verbessert.

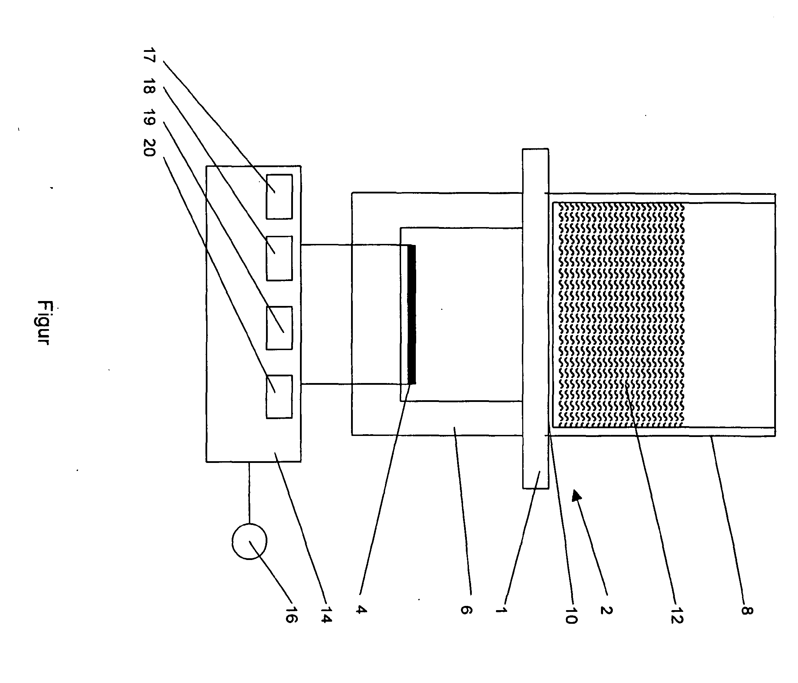

Ein Ausführungsbeispiel der Erfindung ist in der Zeichnung rein schematisch dargestellt und wird nachfolgend näher beschrieben. Es zeigt die

Figur     ein autarkes Kochfeld, bei dem das Verfahren gemäß der Erfindung verwendet wird.

In der einzigen Fig. ist ein autarkes Kochfeld dargestellt. Das Kochfeld weist eine als Glaskeramikplatte ausgebildete Kochfeldplatte 1 auf, wobei ein Bereich der Glaskeramikplatte als Kochstelle 2 ausgebildet ist. Unterhalb der Kochstelle 2 ist eine als elektrischer Strahlungsheizkörper ausgebildete Strahlungsheizquelle 4 mit einem Emissionskoeffizienten $\varepsilon_1$ angeordnet, wobei der Strahlungsheizkörper 4 durch eine Heizkörperisolierung 6 derart von der Umgebung isoliert ist, dass lediglich ein geringer Anteil der durch den Strahlungsheizkörper 4 erzeugten Wärme als Verlustwärme in die Umgebung abgegeben wird. Der überwiegende Anteil der erzeugten Wärme wird von der Heizfläche $A_1$ des Strahlungsheizkörpers 4 in Richtung der Unterseite der Kochstelle 2 abgestrahlt. Während eines Kochvorgangs ist ein Kochtopf 8 mit dessen Kochtopfboden 10 auf der Kochstelle 2 aufgestellt. In dem Kochtopf 8 befindet sich das Kochgut 12. Das Kochfeld weist im Bereich der Kochstelle 2 einen hohen Transmissionsgrad auf, so dass der von der Strahlungsheizquelle 4 bei einer Heiztemperatur $T_1$ auf die Unterseite der Kochstelle 2 abgestrahlte Wärmestrom $Q_{1/2}$ das Kochfeld im Bereich der Kochstelle 2 im Wesentlichen verlustfrei durchdringen kann. Der von der Strahlungsheizquelle 4 abgestrahlte Wärmestrom $Q_{1/2}$ wird somit von der dem Kochfeld zugewandten Oberfläche des Kochtopfbodens 10, nämlich der zu beheizenden Fläche $A_2$, empfangen.

Eine Gerätesteuerung 14 ist mit einem Bedienknebel 16 und der Strahlungsheizquelle 4 derart verbunden, dass die der Strahlungsheizquelle 4 zugeführte elektrische Leistung mittels einer Betätigung des Bedienknebels 16 einstellbar ist. Darüber hinaus weist die Gerätesteuerung 14 eine Vorrichtung 17 zur Ermittlung der Heiztemperatur $T_1$ und eine Vorrichtung 18 zur Ermittlung des Wärmestroms $Q_{1/2}$ auf, wobei $T_1$ über eine mittels der Vorrichtung 17 durchgeführte Widerstandsmessung an der Strahlungsheizquelle 4 und $Q_{1/2}$ über die mittels der Vorrichtung 18 erfassten und für die Kochstelle 2 eingestellten Leistungsstufe während der gesamten Beheizungsdauer der Fläche $A_2$ fortlaufend ermittelt wird. Ferner weist die Gerätesteuerung 14 eine Auswerteeinheit 19 und einen Speicher 20 auf, in dem eine Vielzahl von aus Wärmestrom $Q_{1/2}$ und Heiztemperatur $T_1$ gebildeten Wertepaaren $Q_{1/2}$-$T_1$ abgespeichert sind, denen jeweils Referenz-Emissionskoeffizienten $\varepsilon_2$ zugeordnet sind.

Die Funktionsweise des erfindungsgemäßen Verfahrens wird nachfolgend anhand der Fig. und den relevanten physikalischen Formeln näher erläutert:

Der Wärmestrom $Q_{1/2}$ der elektrischen Strahlungsheizquelle 4 ergibt sich aus:

$$Q = P = \frac{U^2}{R},$$

wobei Q gleich $Q_{1/2}$, P gleich der der Strahlungsheizquelle 4 zugeführten elektrischen Leistung, U gleich der an der Strahlungsheizquelle 4 anliegenden elektrischen Spannung und R gleich dem elektrischen Widerstand der Strahlungsheizquelle 4 ist. Diese Gleichung vernachlässigt die in der Praxis immer auftretenden Wärmeverluste.

Aus der obigen Gleichung und der erweiterten Stefan-Boltzmann-Gleichung ergibt sich der physikalische Zusammenhang zwischen der Heizfläche $A_1$ und der zu beheizenden Fläche $A_2$, nämlich:

$$Q = c_{1,2} A \left( (T_1 + 273)^4 - (T_2 + 273)^4 \right) = \frac{\sigma}{\frac{1}{\varepsilon_1} + \frac{1}{\varepsilon_2} - 1} A \left( (T_1 + 273)^4 - (T_2 + 273)^4 \right),$$

wobei zusätzlich zu den bereits eingeführten Formelzeichen $C_{1,2}$ die Strahlungsaustauschzahl, $A = A_1 = A_2$, $T_2$ die Temperatur der zu beheizenden Fläche $A_2$ und $\sigma$ die Stefan-Boltzmann-Konstante mit $\sigma = 5,67 * 10^{-8}$ $Wm^{-2}K^{-4}$ ist. Diese Gleichung vernachlässigt, dass die Flächen $A_1$ und $A_2$ nicht identisch groß sind und die Fläche $A_1$ eine nicht plane Fläche ist. Ferner wird davon ausgegangen, dass die beiden Flächen $A_1$ und $A_2$ parallel zueinander angeordnet sind, was in dem vorliegenden Ausführungsbeispiel gegeben ist.

Da bei der vorliegenden Verwendung die Heiztemperatur $T_1$ viel größer als die an dem Kochtopfboden 10 zu erwartenden Temperaturen $T_2$ ist, kann bei bekannter Heiztemperatur $T_1$, bekanntem Emissionskoeffizienten $\varepsilon_1$ der Strahlungsheizquelle 4, bekanntem Wärmestrom $Q_{1/2}$ von der Fläche $A_1$ zu der Fläche $A_2$ und bekanntem konstruktiven Aufbau des autarken Kochfelds der Emissionskoeffizient $\varepsilon_2$ der zu beheizenden Fläche $A_2$ wie folgt bestimmt werden:

Die Kochstelle 2 ist nicht beheizt. Der Kochtopf 8 mit dem zu garenden Kochgut 12 wird mit dem Kochtopfboden 10 auf die Kochstelle 2 aufgestellt. Mittels des Bedienknebels 16 wird die Leistungsstufe der Kochstelle 2 von dem Benutzer eingestellt, so dass die Strahlungsheizquelle 4 mit elektrischem Strom versorgt wird und Wärme abgibt. Gleichzeitig steigt die Heiztemperatur $T_1$ an. Aufgrund der eingestellten Leistungsstufe und der mittels der Widerstandsmessung an der Strahlungsheizquelle 4 ermittelten Heiztemperatur $T_1$ wird mittels der Auswerteeinheit 19 der Wärmestrom $Q_{1/2}$ ermittelt.

Die hierfür erforderlichen Relationen sowie die Vielzahl von in dem Speicher 20 abgespeicherten Relationen zwischen Wertepaaren $Q_{1/2}$-$T_1$ und Referenz-Emissionskoeffizienten $\varepsilon_2$ wurden zeitlich vorher durch Versuche an baugleichen autarken Kochfeldern ermittelt und in dem Speicher 20 der Gerätesteuerung 14 abgespeichert. Hierdurch wurden auch die oben erläuterten Abweichungen von den theoretischen physikalischen Relationen und unvermeidbarer Wärmeverluste hinreichend kompensiert.

Nachdem die aktuelle Heiztemperatur $T_1$ und der aktuelle Wärmestrom $Q_{1/2}$ in der Auswerteeinheit 19 verfügbar sind, wird das daraus gebildete Wertepaar $Q_{1/2}$-$T_1$ in der Auswerteeinheit 19 mit den abgespeicherten Wertepaaren $Q_{1/2}$-$T_1$ auf dem Fachmann bekannte Weise verglichen. Der dem ähnlichsten abgespeicherten Wertepaar $Q_{1/2}$-$T_1$ zugeordnete Referenz-Emissionskoeffizient $\varepsilon_2$ wird für eine weitere Verwendung in der Gerätesteuerung 14 ausgewählt.

Das erfindungsgemäße Verfahren wird bei dem vorliegenden Ausführungsbeispiel während der gesamten

Beheizungsdauer der Fläche $A_2$ fortlaufend durchgeführt. Solange sich der Wert des auf diese Weise ermittelten Emissionskoeffizienten $\varepsilon_2$ noch stark ändert, ist das oben erläuterte System noch nicht eingeschwungen. Erst wenn sich der Wert von $\varepsilon_2$ nicht mehr ändert oder sich lediglich in einem vorher festgelegten Toleranzbereich ändert, wird $\varepsilon_2$ bzw. ein aus den letzten Werten durch übliche mathematische Rechenoperationen erzeugter Mittelwert $\varepsilon_2$ zur Regelung der Strahlungsheizquelle 4 und damit des autarken Kochfelds verwendet.

Der ermittelte Emissionskoeffizient $\varepsilon_2$ wird bei dem vorliegenden Ausführungsbeispiel für eine an sich bekannte pyrometrische Messung der Temperatur $T_2$ verwendet, da eine derartige Temperaturmessung ohne vorherige Kenntnis des Emissionskoeffizienten $\varepsilon_2$ zu ungenau für eine Regelung der Strahlungsheizquelle 4 des Kochfelds wäre. Der Emissionskoeffizient $\varepsilon_2$ ist aufgrund verschiedener Materialien und Kochtopfbodengeometrien von Kochtopf zu Kochtopf sehr unterschiedlich. Da der Benutzer bei seinem Kochfeld normalerweise voneinander verschiedene Kochtöpfe 8 verwendet, die eben nicht Kochtopfböden 10 mit einheitlichen Emissionskoeffizienten $\varepsilon_2$ aufweisen, ist die Verwendung des dem jeweils verwendeten Kochtopf 8 entsprechenden Emissionskoeffizienten $\varepsilon_2$ für eine genauere Regelung der Kochtopftemperatur und damit der Temperatur des Kochguts 12 unerlässlich.

Abweichend hiervon ist es auch denkbar, dass das Verfahren nicht fortlaufend sondern zu einem vorher festgelegten Zeitpunkt oder einer vorher festgelegten Zeitdauer während der Beheizung der Fläche $A_2$ erfolgt. In diesem Fall ist es erforderlich, dass das System bei der Durchführung des erfindungsgemäßen Verfahrens bereits eingeschwungen ist. Dies wird auf dem Fachmann hinlänglich bekannte Weise gewährleistet.

Darüber hinaus ist das erfindungsgemäße Verfahren nicht auf das erläuterte Ausführungsbeispiel begrenzt. Beispielsweise ist auch eine Anwendung bei anderen Haushaltsgeräten, insbesondere bei anderen Gargeräten, denkbar. Das erfindungsgemäße Verfahren kann überall dort, wo die Temperatur $T_2$ einer zu beheizenden Fläche $A_2$ mittels einer pyrometrischen Messung ermittelt werden soll, sinnvoll eingesetzt werden. Ferner ist es ebenfalls möglich, den Wärmestrom $Q_{1/2}$ mittels eines Sensors zu bestimmen. Die Einstellung der Leistungsstufe für die Kochstelle 2 kann bei hochwertigen Herden oder Kochfeldern auch durch die Gerätesteuerung 14 selbst in Abhängigkeit von dem über Bedienelemente ausgewählten oder durch die Gerätesteuerung 14 sensorisch erkannten Gargut erfolgen.

**Patentansprüche**

1. Verfahren zur Bestimmung des Emissionskoeffizienten $\varepsilon_2$ einer zu beheizenden Fläche $A_2$, insbesondere einer Kochstelle oder eines Kochtopfbödens, mittels einer elektrischen Auswerteeinheit, wobei das Verfahren die folgenden Verfahrensschritte aufweist:

   - Beheizen der Fläche $A_2$ mittels einer Strahlungsheizquelle (4), die eine Heizfläche $A_1$ und einen Emissionskoeffizienten $\varepsilon_1$ aufweist, wobei mittels einer Vorrichtung (17) zur Ermittlung der Heiztemperatur $T_1$ der Heizfläche $A_1$ und gleichzeitig mit einer Vorrichtung (18) zur Ermittlung des von der Heizfläche $A_1$ in Richtung der Fläche $A_2$ abgestrahlten und von der Fläche $A_2$ empfangenen Wärmestroms $Q_{1/2}$ die Heiztemperatur $T_1$ und der Wärmestrom $Q_{1/2}$ ermittelt werden,
   - Auswählen eines Referenz-Emissionskoeffizienten $\varepsilon_2$ aus einer Vielzahl von in einem Speicher der Auswerteeinheit abgespeicherten Referenz-Emissionskoeffizienten $\varepsilon_2$ in Abhängigkeit des aus dem Wärmestrom $Q_{1/2}$ und der Heiztemperatur $T_1$ gebildeten Wertepaares $Q_{1/2}$-$T_1$.

2. Verfahren nach Anspruch 1,
   **dadurch gekennzeichnet,**
   **dass** mittels der Vorrichtung (17) zur Ermittlung der Heiztemperatur $T_1$ eine Widerstandsmessung an der Strahlungsheizquelle (4) erfolgt.

3. Verfahren nach Anspruch 1 oder 2,
   **dadurch gekennzeichnet,**
   **dass** die Vorrichtung (18) zur Ermittlung des Wärmestroms $Q_{1/2}$ einen Sensor aufweist.

4. Verfahren nach Anspruch 1 oder 2,
   **dadurch gekennzeichnet,**
   **dass** mittels der Vorrichtung (18) zur Ermittlung des Wärmestroms $Q_{1/2}$ die für die Strahlungsheizquelle (4) über ein Bedienelement (16) manuell oder eine Gerätesteuerung (14) automatisch gewählte Leistungsstufe erfasst wird.

5. Verfahren nach mindestens einem der Ansprüche 1 bis 4,
   **dadurch gekennzeichnet,**
   **dass** der so ermittelte Emissionskoeffizient $\varepsilon_2$ der zu beheizenden Fläche $A_2$ bei einer pyrometrischen Tempera-

turmessung zur Ermittlung der Temperatur $T_2$ der zu beheizenden Fläche $A_2$ verwendet wird.

**6.** Verfahren nach mindestens einem der Ansprüche 1 bis 5,
**dadurch gekennzeichnet,**
**dass** das Verfahren während der gesamten Beheizungsdauer der Fläche $A_2$ fortlaufend durchgeführt wird.

**7.** Verfahren nach Anspruch 5 oder 6,
**dadurch gekennzeichnet,**
**dass** die pyrometrische Temperaturmessung als Teil der Gerätesteuerung (14) eines Haushaltsgeräts, insbesondere eines Herds oder eines autarken Kochfelds, verwendet wird.

**Claims**

**1.** Method for determining the emission coefficient $\varepsilon_2$ Of a surface $A_2$ to be heated, more especially of a hot plate or of the bottom of a pan, through the intermediary of an electric evaluation unit, wherein the method includes the following method steps:

- heating the surface $A_2$ through the intermediary of a radiant heat source (4), which includes a heating surface $A_1$ and an emission coefficient $\varepsilon_1$, wherein through the intermediary of an apparatus (17) for determining the heating temperature $T_1$ of the heating surface $A_1$ and at the same time using an apparatus (18) for determining the heat flow $Q_{1/2}$ that is radiated by the heat surface $A_1$ in the direction of the surface $A_2$ and is received by the surface $A_2$, the heating temperature $T_1$ and the heat flow $Q_{1/2}$ are determined,
- selecting a reference emission coefficient $\varepsilon_2$ from a plurality pf reference emission coefficients $\varepsilon_2$ that are stored in a memory of the evaluation unit in dependence on the pair of variables $Q_{1/2}$-$T_1$ that are formed from the heat flow $Q_{1/2}$ and the heating temperature $T_1$.

**2.** Method according to claim 1, **characterised in that** through the intermediary of the apparatus (17) for determining the heating temperature $T_1$ a resistance measurement is effected at the radiant heat source (4).

**3.** Method according to claim 1 or 2, **characterised in that** the apparatus (18) for determining the heat flow $Q_{1/2}$ includes a sensor.

**4.** Method according to claim 1 or 2, **characterised in that** through the intermediary of the apparatus (18) for determining the heat flow $Q_{1/2}$ the power level selected for the radiant heat source (4) is detected manually by means of a control element (16) or automatically by means a device controlling means (14).

**5.** Method according to at least one of claims 1 to 4, **characterised in that** the emission coefficient $\varepsilon_2$, determined in this manner, of the surface $A_2$ to be heated is used for a pyrometric temperature measurement for determining the temperature $T_2$ of the surface $A_2$ to be heated.

**6.** Method according to at least one of claims 1 to 5, **characterised in that** the method is carried out continuously during the entire time the surface $A_2$ is heated.

**7.** Method according to claim 5 or 6, **characterised in that** the pyrometric temperature measurement is used as part of the appliance controlling means (14) of a domestic appliance, more especially of a cooker or a self-sufficient ceramic hob.

**Revendications**

**1.** Procédé pour déterminer le coefficient d'émission $\varepsilon_2$ d'une surface à chauffer $A_2$, en particulier d'un poste de cuisson ou d'un fond de casserole, au moyen d'une unité d'évaluation électrique, le procédé présentant les étapes de procédé suivantes :

- chauffage de la surface $A_2$ au moyen d'une source de chauffage à rayonnement (4) qui présente une surface chauffante $E_1$ et un coefficient d'émission $\varepsilon_1$, la température de chauffage $T_1$ et le flux de chaleur $Q_{1/2}$ étant déterminés au moyen d'un dispositif (17) servant à déterminer la température de chauffage $T_1$ de la surface

chauffante $A_1$ et en même temps avec un dispositif (18) servant à déterminer le flux de chaleur $Q_{1/2}$ rayonné par la surface chauffante $A_1$ en direction de la surface $A_2$ et reçu par la surface $A_2$,
- sélection d'un coefficient d'émission de référence $\varepsilon_2$ parmi une pluralité de coefficients d'émission de référence $\varepsilon_2$ stockés dans une mémoire de l'unité d'évaluation en fonction de la paire de valeurs $Q_{1/2}$-$T_1$ formée par le flux de chaleur $Q_{1/2}$ et la température de chauffage $T_1$.

2.  Procédé selon la revendication 1,
    **caractérisé en ce**
    **que** l'on réalise une mesure de résistance sur la source de chauffage à rayonnement (4) au moyen du dispositif (17) servant à déterminer la température de chauffage $T_1$.

3.  Procédé selon la revendication 1 ou 2,
    **caractérisé en ce**
    **que** le dispositif (18) servant à déterminer lé flux de chaleur $Q_{1/2}$ présente un capteur.

4.  Procédé selon la revendication 1 ou 2,
    **caractérisé en ce**
    **que** l'on saisit le niveau de puissance sélectionné manuellement par un élément de commande (16) ou automatiquement par une commande d'appareil (14) pour la source de chauffage à rayonnement (4) au moyen du dispositif (18) servant à déterminer le flux de chaleur $Q_{1/2}$.

5.  Procédé selon au moins l'une des revendications 1 à 4,
    **caractérisé en ce**
    **que** l'on utilise le coefficient d'émission $\varepsilon_2$ de la surface, échauffer $A_2$ ainsi déterminé lors d'une mesure de température pyrométrique servant à déterminer la température $T_2$ de la surface à chauffer $A_2$.

6.  Procédé selon au moins l'une des revendications 1 à 5,
    **caractérisé en ce**
    **que** le procédé est exécuté d'une façon continue pendant toute la durée de chauffage de la surface $A_2$.

7.  Procédé selon la revendication 5 ou 6,
    **caractérisé en ce**
    **que** la mesure de température pyrométrique est utilisée comme composante de la commande d'appareil (14) d'un appareil ménager, en particulier d'une cuisinière ou d'un plan de cuisson autonome.

Figur